# EUROPÄISCHE PATENTSCHRIFT

(11) **EP 0 798 416 B1**
(45) Veröffentlichungstag und Bekanntmachung des Hinweises auf die Patenterteilung: **11.12.2002**
(21) Anmeldenummer: 96114266.8
(22) Anmeldetag: 06.09.1996
(51) Int. Cl.: D21B 1/32

(54) **Flotationsverfahren und Vorrichtung zur Abscheidung von Feststoff aus einer papierfaserhaltigen Suspension**
Flotation process and device for separating solid particles of a paper fibre suspension
Procédé de flotation et dispositif pour la séparation de particules solides d'une suspension à fibres

(30) Priorität: 26.03.1996 DE 19611864
(43) Veröffentlichungstag der Anmeldung: 01.10.1997
(60) Teilanmeldung: 01104165.4
(73) Patentinhaber: Voith Sulzer Stoffaufbereitung GmbH, 88191 Ravensburg (DE)
(72) Erfinder: Britz, Herbert, 88213 Ravensburg-Weissenau (DE); Kriebel, Almut, 88250 Weingarten (DE); Schulze, Hans-Joachim, Dr., 09599 Freiberg/Sa. (DE); Gommel, Axel, 88212 Ravensburg (DE); Schabel, Samuel, Dr., 88212 Ravensburg (DE); Holik, Herbert, 88213 Ravensburg (DE); Martin, Thomas, 89129 Langenau (DE); Kemper, Martin, 88213 Ravensburg (DE); Mannes, Wolfgang, 88213 Ravensburg-Bavendorf (DE)
(74) Vertreter: Manitz, Finsterwald & Partner

(56) Entgegenhaltungen:
- EP-A- 0 580 087
- EP-A- 0 674 040
- WO-A-85/00021
- GB-A- 2 281 521
- US-A- 5 039 400
- US-A- 5 234 112

## Beschreibung

Die Erfindung betrifft ein Flotationsverfahren gemäß dem Oberbegriff des Anspruchs 1 sowie eine Vorrichtung zur Durchführung des Verfahrens gemäß Oberbegriff des Anspruchs 31.

Flotationsverfahren werden bei der Behandlung von papierfaserhaltigen Suspensionen eingesetzt, um faserfremde Feststoffteilchen, wie z.B. Druckpartikel oder Kleberrückstände, aus der Suspension zu entfernen. Bei diesen an sich bekannten Verfahren wird der physikalische Effekt ausgenutzt, daß die Papierfasern hydrophil und ein großer Teil der störenden Verschmutzungen hydrophob sind. Bei Durchführung einer Flotation gehen aus diesen Gründen die auszuscheidenden Feststoffpartikel an die Gasblasen, insbesondere Luftblasen. Diese steigen dann zusammen mit den angelagerten Teilchen im Erd-Schwerefeld zur Oberfläche oder im Zentrifugalfeld zur Mitte und bilden dort einen Schaum, in dem die unerwünschten Bestandteile aufkonzentriert sind. Eine andere Anwendung in der Papierindustrie ist die möglichst weitgehende Entfernung aller in einer Suspension enthaltenen Feststoffe. Man spricht in diesem letztgenannten Fall auch von Klärflotation, Totalflotation oder aufgrund der Blasenbildungsmechanismen von Entspannungsflotation.

Derartige Verfahren sind seit langem in Gebrauch und erfüllen ihren Zweck in vielen Fällen zur Zufriedenheit. Wie bei allen technischen Trennprozessen gibt es jedoch nach wie vor Probleme mit entweder zu geringer Entfernung der Schmutzstoffteilchen oder zu großem Verlust von Wertstoffen, insbesondere von Papierfasem oder von beiden gleichzeitig.

Bei der Erzflotation werden - anders als bei der Behandlung von Fasersuspensionen - die Wertstoffe mit dem Flotationsschaum ausgetragen. Das führt zu einer gänzlich anderen Aufteilung der Mengenströme, insbesondere einem Vielfachen der Schaummenge. Es ist bekannt, z.B. aus der EP 0 435 985 B1 sowie der US-PS 5 039 400, in den Flotationsbehälter Wasser zuzugeben; diese Zugabe dient dabei dem Mengenausgleich, der erforderlich ist, um den mengenmäßig bedeutenden Verlust infolge des Abzuges von Wertstoffen zusammen mit dem Schaum auszugleichen.

Aus der US-PS 5 234 112 ist ebenfalls ein Schaum-Flotationsreaktor zur Trennung von hydrophoben und hydrophilen Produkten bekannt. Dieser Reaktor wird konkret im Zusammenhang mit der Erzflotation bei der Erzaufbereitung beschrieben, d.h. er dient zur Trennung der Erzbestandteile von der Gangart, wobei das Erz in den Flotationschaum gelangt, wo es mittels hoher Strömungsgeschwindigkeiten in der Schwebe gehalten werden muß, um mit dem Schaum abtransportiert werden zu können. Es wird zwar in dieser US-PS 5 234 112 darauf hingewiesen, daß auch in Papierpulpe enthaltene Ink-Bestandteile oder Kaolin als erwünschtes Material gewonnen werden könnte, aber es wird nicht offenbart, auf welche Weise dies in wirksamer Weise realisiert werden kann. Das vorgesehene Einbringen von Wasser in Form eines Sprühstrahls in den Schaum dient dazu, das jeweils ungewünschte Material von dem Gutstoff zu trennen und in eine am Rand des Reaktors angebrachte Rinne zu überführen.

Die Erfindung liegt die Aufgabe zugrunde, die Trennqualität bei dem eingangs genannten Flotationsverfahren weiter zu verbessern und die Schmutzstoffentfernung zu verstärken. Das Verfahren soll dabei keinen unverhältnismäßig großen Mehraufwand zu seiner Durchführung erforderlich machen.

Diese Aufgabe wird durch die in den Ansprüchen 1 und 31 genannten Maßnahmen erfüllt, wobei die Unteransprüche besonders günstige Ausgestaltungen des Verfahrens bzw. der Vorrichtung beschreiben.

Durch die Zugabe der Flüssigkeit in der im Anspruch 1 angegebenen Art und Weise bleibt der Schaum stabil, die Blasen werden nicht zum Zerplatzen gebracht. Es hat sich auch gezeigt, daß der so behandelte Schaum oft weiter stabilisiert wird, d.h. daß die Gasblasen eine längere Zeit bis zum Platzen haben. Ein stabiler Schaum hält die hydrophoben Teile besser fest, was wünschenswert ist. Außerdem werden die Lamellen des Flotationsschaumes dicker, so daß sich die hydrophilen Teile leichter durch die Gerüststruktur des Schaumes hindurch bewegen können. Dadurch wird die Rückgewinnung der Wertstoffe, insbesondere Papierfasern, aus dem Schaum heraus und zurück in die Faserstoffsuspension begünstigt. Andernfalls würde ihre Entfernung zu einem Verlust führen. Ein solcher Verlust kann zwar auch durch eine Sekundärflotation verringert oder vermieden werden, was aber einen beträchtlichen zusätzlichen Aufwand erfordert.

Die Menge der zugeführten Flüssigkeit kann in den meisten Fällen sehr gering gehalten werden, so daß weder der Schaum übermäßig verdünnt wird, noch eine zusätzliche Belastung bei der Abwasseranlage eintritt.

Spezielle Maßnahmen zu günstigen Ausgestaltungen des Verfahrens werden in den Unteransprüchen 2 bis 30 beschrieben. Die Wahl geeigneter Betriebsparameter ergibt sich aus den vorliegenden Bedingungen und den gestellten Anforderungen. Entscheidend ist, daß der Flotationsschaum durch die Flüssigkeit nicht zerstört sondern zur Lösung der Aufgabe verbessert wird.

Das aus vielen Anwendungen bekannte Niederschlagen des Schaumes mit Hilfe von Wasser hat die genau gegenteilige Aufgabe: Der Schaum soll zusammenbrechen und mit allen Bestandteilen abfließen. Das Niederschlagen erfolgt dabei erst an oder in der Schaumabfuhrrinne, also dort wo der eigentliche Trennvorgang bereits vorüber ist. Dabei wird das Wasser nicht sehr fein verteilt, hat in der Regel einen scharfen Strahl und einen hohen flächenbezogenen Mengenstrom.

Die Erfindung and ihre Vorteile werden erläutert und dargestellt anhand von Zeichnungen. Dabei zeigen schematisch:
- Fig. 1: eine einfache erfindungsgemäße Flotationsvorrichtung;
- Fig. 2: eine Variante, säulenförmig aufgebaute Flotationsvorrichtung;
- Fig. 3: eine Flotationsvorrichtung mit Zentrifugalfeld;
- Fig. 4 und 5: diverse Vorrichtungen zur Zuführung der Flüssigkeit;
- Fig. 6: eine weitere Flotationsvorrichtung mit Zentrifugalfeld;
- Fig. 7: Variante der Flotationsvorrichtung der Fig. 3, anders betrieben;
- Fig. 8: Variante der Flotationsvorrichtung der Fig. 6, anders betrieben.

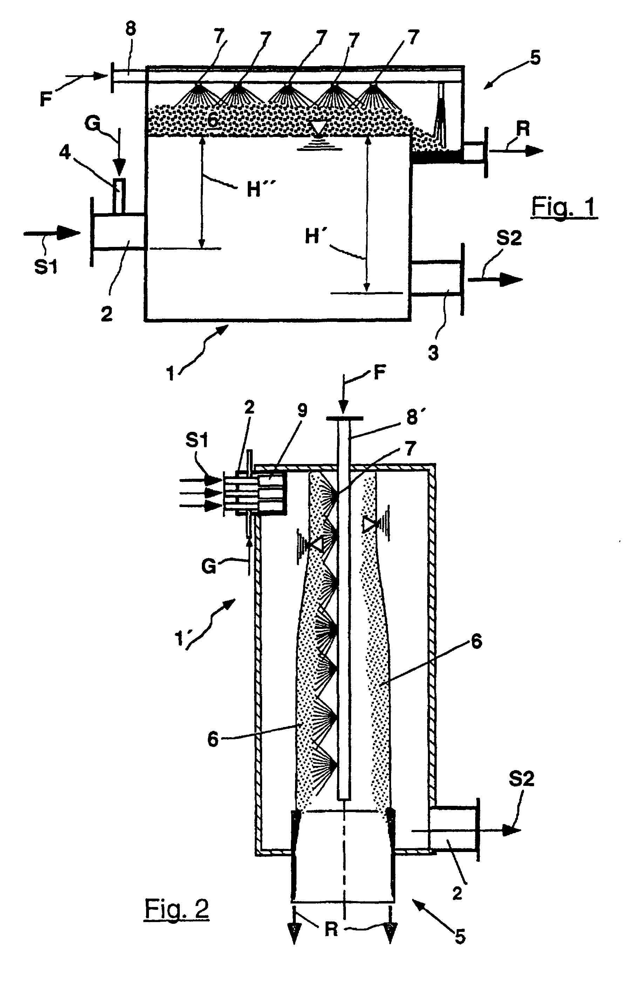

In Fig. 1 ist eine Flotationsvorrichtung dargestellt mit einem Flotationsbehälter 1, einem Einlauf 2 für die zu flotierende Suspension S 1, einem Auslauf 3 für die durch Flotation gereinigte Suspension S 2 sowie eine Flotationsschaum- Abführeinrichtung 5. Bei ähnlich ausgebildeten Flotationsvorrichtungen kann am Auslauf 3 anstelle einer faserstoffhaltigen Suspension S 2 auch ein geklärtes Filtrat gewonnen werden (Klärflotation), Im Betrieb ist der Flotationsbehälter 1 zum Teil mit Suspension gefüllt, die mit einem Blasen bildenden Gas vermischt ist. Hierzu dienen symbolisch gezeigte Mittel 4, durch die das Gas G eingeführt wird. In an sich bekannter Weise wird durch die Gasblasen ein Flotationsschaum 6 erzeugt, der oben auf der Suspension aufschwimmt. Dieser kann das restliche Volumen des Flotationsbehälters 1 teilweise oder, wie später noch gezeigt wird, auch vollständig ausfüllen. Die maximale Steighöhe der Gasblasen ist hier die Höhendifferenz H' zwischen Auslauf 3 und Füllstand der Suspension, da durch den Auslauf ein Teil der Gasblasen herabgeschleppt werden kann. Die Höhendifferenz zwischen Einlauf 2 und Füllstand ist als H" gekennzeichnet Der Flotationsschaum 6 konzentriert hydrophobe unerwünschte Bestandteile, die aus der Faserstoffsuspension stammen. Ihm wird durch an einem Sprührohr 8 angebrachte Zuführeinrichtungen 7 eine Flüssigkeit F zugeführt. Diese Flüssigkeit kann z.B. Wasser sein, mit oder ohne Chemikalien. Die Zuführung erfolgt so, daß der Schaum dadurch nicht zerstört wird, sondern sich eher noch etwas besser ausbildet. Hierzu kann die Flüssigkeit so weit versprüht werden, daß die kinetische Energie der Tröpfchen zu gering ist, um eine Schaumblase zu zerstören. Es ist auch möglich, einen sehr dünnen Flüssigkeitsfilm zu bilden, der in den Schaum eingebracht wird. Oder es wird ein netz- oder siebartiges Verteilelement verwendet, das die auftreffende Flüssigkeit fein verteilt.

Die Flüssigkeit kann mit Chemikalien, z.B. einem Tensid versetzt sein, die den Schaum zusätzlich stabilisieren. Wegen der kleinen Menge der zugeführten Flüssigkeit im Vergleich zu der Suspension kann dann mit geringen Chemikalienkosten ein deutlicher Effekt erzielt werden. Der so behandelte Flotationsschaum gelangt durch seitlichen Abfluß in die Flotationsschaum- Abführeinrichtung 5. Dort kann er, z.B. wie hier gezeigt, mit einem scharfen Wasserstrahl niedergeschlagen werden. Dieses Niederschlagen führt zum Zerplatzen der den Schaum bildenden Gasblasen. Danach wird er als Rejekt R abgeleitet.

Bei der in Fig. 2 gezeigten Vorrichtung wird die Flotation durch ein Zentrifugalfeld unterstützt. Ein solches Feld läßt sich, ähnlich wie bei Hydrozyklonen, durch tangentialen Einlauf der zu flotierenden Suspension S 1 erzeugen. Dabei überlagern sich das Zentrifugalfeld und das Erd-Schwerefeld. Bei der hier dargestellten Anordnung wird die Suspension von oben in einen zylindrischen Flotationsbehälter 1' eingepumpt und unten wieder daraus entfemt. Die Transportbewegung des Flotationsschaumes 6 ist, axial betrachtet, in derselben Richtung wie die der Suspension, d.h. von oben nach unten. Es kann aber auch eine genau entgegengesetzte Strömungsführung sinnvoll sein, bei der die Suspension unten zugeführt und oben abgezogen wird. Die hier dargestellte Anordnung eignet sich gut für die Durchführung des erfindungsgemäßen Verfahrens, da sich der durch die zugeführte Flüssigkeit F verbesserte Schaum aufgrund seines Gewichtes nach unten leicht abführen läßt. Das im zentralen Bereich des Flotationsbehälters 1 eingezeichnete Sprührohr 8' für die dem Flotationsschaum 6 zuzuführende Flüssigkeit F sind wiederum nur exemplarisch zu verstehen. Wie bereits erwähnt, gibt es hierfür auch noch andere Möglichkeiten. Es ist vorteilhaft, die zu flotierende Suspension S 1 mit Hilfe eines Turbulenzerzeugers 9, hier als Stufendiffusoren dargestellt, in Mikroturbulenz zu versetzen, um sie besser flotierbar zu machen und das zugegebene Gas G besser zu verteilen. Dadurch wird die Bildung von Gasblasen in der gewünschten Größe und Menge begünstigt.

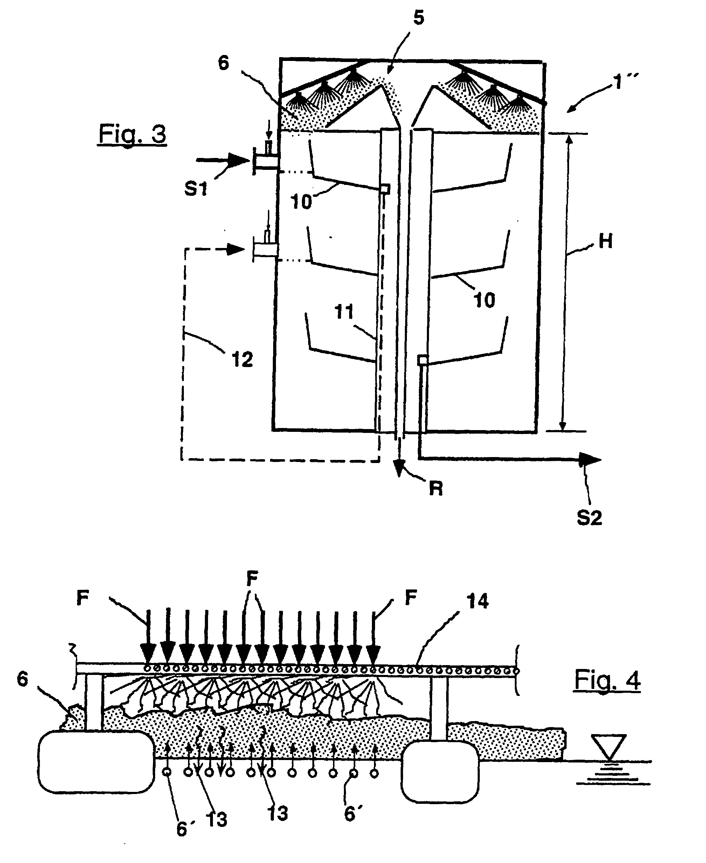

Die in Fig. 3 gezeigte Vorrichtung ist ebenfalls zylindrisch mit vertikaler Achse und hat eine Füllhöhe H von mindestens 3 m. Man spricht dann auch von Säulenflotation. Bei einem Flotationsverfahren für die Suspension von Papierstoffasem ist es günstig, daß in einem Flotationsbehälter 1" flächige Einbauten 10 eingesetzt werden, die das unerwünschte Vermischen von bereits gereinigter Suspension mit dem aufsteigenden Schaum verhindern. Bei dieser Ausführungsform ist es vorteilhaft, einen Teil der gereinigten Suspension aus Zwischenebenen des Flotationsbehälters 1" abzuziehen und stromaufwärts, bezogen auf die Strömungsrichtung der Gasblasen, wieder zuzugeben, eventuell nach erneuter Gaszumischung. Das ist durch gestrichelten Pfeil 13 angedeutet.

Fig. 4 zeigt spezielle apparative Details bei Durchführung des Verfahrens. In einigen Fällen ist es günstig, die zugeführte Flüssigkeit F noch einmal feiner zu verteilen, indem man sie auf ein siebförmiges Verteilelement 14 auftreffen läßt. Dieses schwimmt hier auf der Suspension auf, was unabhängig vom Füllstand im Flotationsbehälter für konstante Sprühbedingungen sorgen kann.

Ferner ist in dieser Figur schematisch das Auswaschen von hydrophilen Wertstoffen, die sich im Schaum befinden, gezeigt. Man erkennt schaumbildende Gasblasen 6', die aus der Suspension aufsteigen (Pfeil). Aus dem Flotationsschaum 6 heraus gelangen, veranlaßt oder zumindest unterstützt durch Zugabe der Flüssigkeit F, Wertstoffe, z.B. Papierfasem, zurück in die Suspension, was durch Schlängelpfeile 13 angedeutet ist.

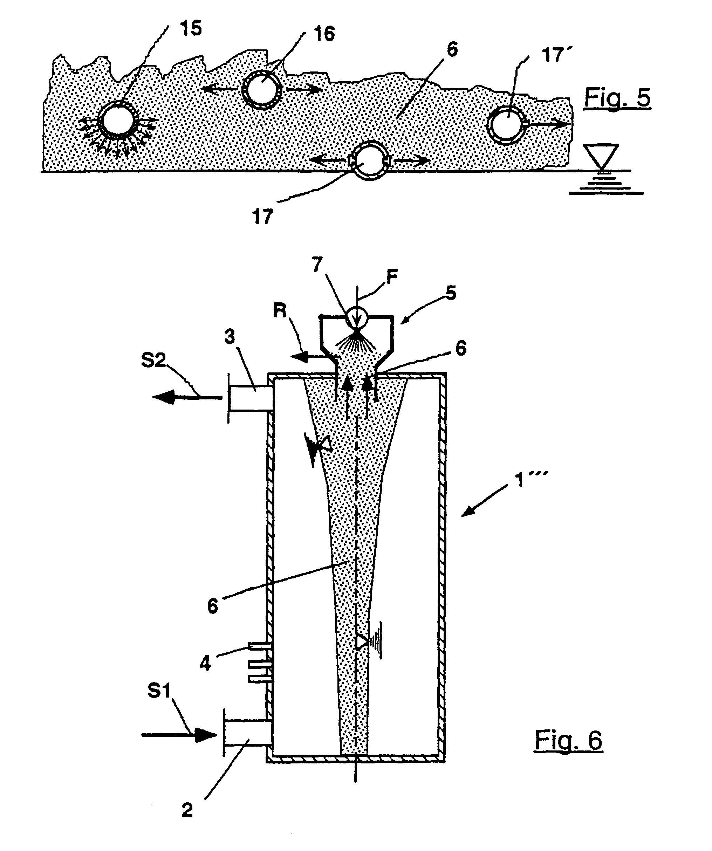

Wie bereits erwähnt, kann die Flüssigkeit von oben auf den Flotationsschaum, aber auch innerhalb desselben, zugeführt werden. D.h. die Zuführeinrichtung kann sowohl über dem Schaum angeordnet sein als auch darinnen. Mehrere Beispiele sind in der Fig. 5 gezeigt. So kann ein feingelochtes oder poröses Rohr 15 in den Schaum eintauchen oder ein geschlitztes Rohr 16 oder ein mit Sprühdüsen versehenes Rohr 17, 17'. Bei unsymmetrischem Austritt kann durch das Ausströmen der Schaumtransport unterstützt werden. Außerdem sind höhenunterschiedliche Positionen innerhalb des Flotationsschaumes dargestellt. Wegen des Aufsteigens des Flotationsschaumes wird auch bei unten liegender Zuführung der Schaum ausreichend benetzt.

Bei einer durch Zentrifugalkraft unterstützten Flotation kann die Strömungsführung der Suspension so gewählt werden, daß diese unten zu- und oben abgeführt wird, wie es im Beispiel der Fig. 6 dargestellt ist. Die Transportbewegung des Flotationsschaumes 6 ist ebenfalls axial von unten nach oben, so daß dieser durch eine oben angebrachte Flotationsschaum- Abführeinrichtung 5 aus dem eigentlichen Flotationsbehälter entfernt wird. Bei dieser Abfuhr nach oben, die in der Regel durch eine anliegende Druckdifferenz unterstützt werden muß, wird mit Hilfe von mindestens einer Zuführeinrichtung 7 die Flüssigkeit F dem Flotationsschaum 6 zugeführt. Bei einer solchen Strömungsführung kann der gesamte zentrale Kern des Flotationsbehälters mit Schaum gefüllt sein.

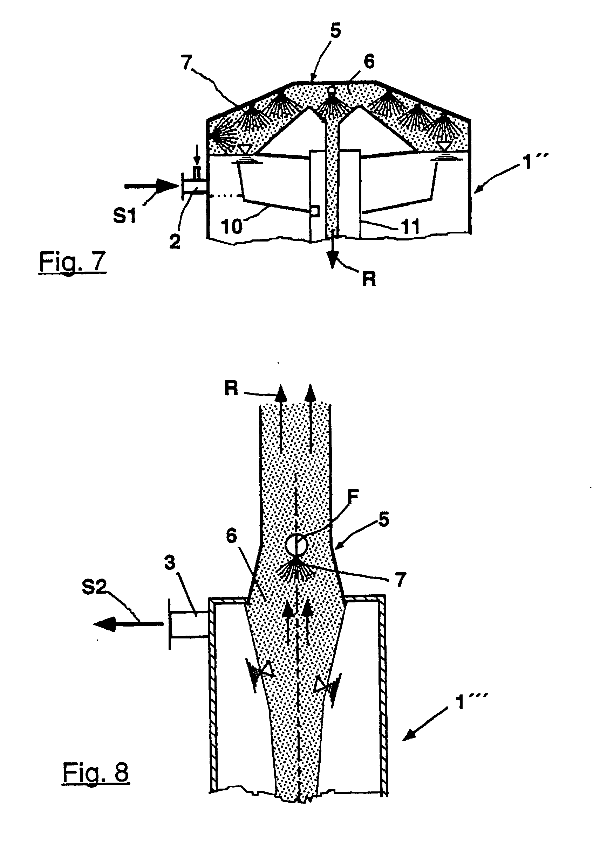

In vielen Fällen ist es gewünscht, daß der Flotationsbehälter vollständig mit Suspension und Schaum gefüllt ist, daß also kein nur mit Luft gefüllter Hohlraum entsteht. Auch dann läßt sich das Verfahren mit großem Vorteil anwenden. Die Zuführeinrichtung liegt dann innerhalb des Schaumes. Ein Beispiel für eine entsprechend anders betriebene Vorrichtung zeigt die Fig. 7 als Variante des anhand der Fig. 3 erläuterten Verfahrens, wobei auch einige Zuführeinrichtungen 7 hier anders angeordnet sind. Die Flotationsschaum-Abführeinrichtung 5 ist vollständig mit Schaum 6 gefüllt.

Die Fig. 8 stellt in Teilansicht eine Abwandlung des Gegenstandes von Fig. 6 dar, ebenfalls mit vollständiger Füllung des Flotationsbehälters 1'" durch Suspension und Flotationsschaum 6. Die Flotationsschaum-Abführeinrichtung 5 für den Rejekt R ist entsprechend angepaßt.

Es ist auch ohne weiteres denkbar, daß die Transportbewegung des Schaumes bei Flotationsvorrichtungen gemäß Fig. 2 oder 6, axial betrachtet, entgegengesetzt der Durchflußrichtung der Suspension gewählt wird.

Wird das Verfahren auf die eingangs erwähnte Klärflotation angewendet, kann die Begasung durch unter Druck gelöster und bei Entspannung frei werdender Luft unmittelbar bei Eintritt in den Flotationsbehälter erfolgen. Diese Technik ist an sich bekannt und führt zu einer großen Anzahl sehr feiner Luftblasen.

## Patentansprüche

1. Flotationsverfahren zur Abscheidung von zumindest einem Teil der in einer papierfaserhaltigen Suspension (S1) enthaltenen störenden Feststoffteilchen, bei dem in einem Flotationsbehälter (1, 1', 1", 1"') Feststoffteilchen zusammen mit Gasblasen im Flotationsschaum (6) gesammelt und abgeleitet werden,
**dadurch gekennzeichnet,**
**daß** dem bereits gebildeten Flotationsschaum (6) zu dessen Stabilisierung eine Benetzungsflüssigkeit (F) mit einer zur Zerstörung des Flotationsschaumes zu geringen Energie zugeführt wird.

2. Flotationsverfahren nach Anspruch 1,
**dadurch gekennzeichnet,**
**daß** dem bereits gebildeten Flotationsschaum (6) eine Flüssigkeit (F) mit einer Benetzungsrate von höchstens 50 Liter pro Quadratmeter und Minute derart zugeführt wird, daß höchstens ein unbedeutender Teil des Flotationsschaumes (6) durch diese Flüssigkeit (F) destabilisiert und zerstört wird.

3. Flotationsverfahren nach Anspruch 2,
**dadurch gekennzeichnet,**
**daß** die Benetzungsrate von höchstens 9 Liter pro Quadratmeter und Minute beträgt.

4. Flotationsverfahren nach Anspruch 1, 2 oder 3,
**dadurch gekennzeichnet,**
**daß** die zugeführte Flüssigkeit (F) in so fein verteilter Form zugeführt wird, daß ein Sprühnebel entsteht.

5. Flotationsverfahren nach Anspruch 4,
**dadurch gekennzeichnet,**
**daß** der Flotationsschaum (6) mit einem Sprühnebel belegt wird, der eine Benetzungsrate von 0,5 bis 5 Liter pro Quadratmeter und Minute hat.

6. Flotationsverfahren nach einem der voranstehenden Ansprüche,
**dadurch gekennzeichnet,**
**daß** beim Versprühen ein Tropfendurchmesser von höchstens 1,5 mm eingestellt wird.

7. Flotationsverfahren nach einem der voranstehenden Ansprüche,
**dadurch gekennzeichnet,**
**daß** beim Versprühen ein Tropfendurchmesser von höchstens 1 mm eingestellt wird.

8. Flotationsverfahren nach einem der voranstehenden Ansprüche,
**dadurch gekennzeichnet,**
**daß** die Auftreffgeschwindigkeit der Tropfen auf dem Flotationsschaum maximal 5 m/sec. ist.

9. Flotationsverfahren nach einem der voranstehenden Ansprüche,
**dadurch gekennzeichnet,**
**daß** die Auftreffgeschwindigkeit der Tropfen auf dem Flotationsschaum maximal 1 m/sec. ist.

10. Flotationsverfahren nach einem der voranstehenden Ansprüche,
**dadurch gekennzeichnet,**
**daß** im Flotationsbehälter (1, 1',1'', 1''') die Steighöhe der Gasblasen in der Suspension bis zum Flotationsschaum (6) maximal 3 m beträgt.

11. Flotationsverfahren nach einem der voranstehenden Ansprüche,
**dadurch gekennzeichnet,**
**daß** im Flotationsbehälter (1, 1', 1", 1'") die Steighöhe der Gasblasen in der Suspension bis zum Flotationsschaum (6) maximal 2 m beträgt.

12. Flotationsverfahren nach einem der voranstehenden Ansprüche,
**dadurch gekennzeichnet,**
**daß** die Zufuhr der Flüssigkeit (F) von einer Stelle aus erfolgt, die sich oberhalb des Flotationsschaumes (6) befindet.

13. Flotationsverfahren nach einem der voranstehenden Ansprüche,
**dadurch gekennzeichnet,**
**daß** die Zufuhr der Flüssigkeit (F) von einer Stelle aus erfolgt, die sich innerhalb des Flotationsschaumes (6) befindet.

14. Flotationsverfahren nach einem der voranstehenden Ansprüche,
**dadurch gekennzeichnet,**
**daß** die Zufuhr der Flüssigkeit (F) von einer Stelle aus erfolgt, die sich im Bereich oder direkt an der Grenzschicht zwischen Flotationsschaum (6) und Suspension befindet.

15. Flotationsverfahren nach einem der voranstehenden Ansprüche,
**dadurch gekennzeichnet,**
**daß** der Flotationsschaum das Volumen zwischen Oberfläche der Suspension und der Innenwandung des Flotationsbehälters (1, 1', 1", 1'") im wesentlichen ausfüllt.

16. Flotationsverfahren nach einem der voranstehenden Ansprüche,
**dadurch gekennzeichnet,**
**daß** ein siebförmiges Verteilelement (14) verwendet wird, das von der Flüssigkeit (F) benetzt wird und diese fein verteilt dem Flotationsschaum (6) zuführt.

17. Flotationsverfahren nach Anspruch 16,
**dadurch gekennzeichnet,**
**daß** das siebförmige Verteilelement (14) über dem Flotationsschaum (6) angebracht ist.

18. Flotationsverfahren nach Anspruch 16,
**dadurch gekennzeichnet,**
**daß** das siebförmige Verteilelement (14) im Flotationsschaum (6) angebracht ist.

19. Flotationsverfahren nach Anspruch 16, 17 oder 18,
**dadurch gekennzeichnet,**
**daß** das siebförmige Verteilelement (14) auf der Suspension im Flotationsbehälter (1, 1', 1", 1'") aufschwimmt.

20. Flotationsverfahren nach Anspruch 16, 17 oder 18,
**dadurch gekennzeichnet,**
**daß** das siebförmige Verteilelement (14) so bewegt wird, daß es den Schaumtransport unterstützt.

21. Flotationsverfahren nach einem der voranstehenden Ansprüche,
**dadurch gekennzeichnet,**
**daß** die Flußrichtung der zugegebenen Flüssigkeit (F) durch den Flotationsschaum (6) etwa rechtwinkelig zur Flußrichtung des Flotationsschaumes (6) ist, so daß das Kreuzstromprinzip angewendet wird.

22. Flotationsverfahren nach einem der Ansprüche 1 bis 20,
**dadurch gekennzeichnet,**
**daß** die Flußrichtung der zugegebenen Flüssigkeit (F) durch den Flotationsschaum (6) im wesentlichen entgegengesetzt der Flußrichtung des Flotationsschaumes (6) ist, so daß das Gegenstromprinzip angewendet wird.

23. Flotationsverfahren nach Anspruch 22,
**dadurch gekennzeichnet,**
**daß** der Flotationsschaum (6) von der Oberfläche der Suspension im Flotationsbehälter (1, 1', 1", 1'") gegen die Richtung des anliegenden Schwerefeldes abgeführt wird.

24. Flotationsverfahren nach Anspruch 22,
**dadurch gekennzeichnet,**
**daß** der Flotationsschaum (F) von der Oberfläche der Suspension im Flotationsbehälter (1, 1', 1", 1'") quer zur Richtung des anliegenden Schwerefeldes abgeführt wird.

25. Flotationsverfahren nach einem der voranstehenden Ansprüche,
**dadurch gekennzeichnet,**
**daß** die Zuführung der Flüssigkeit (F) erfolgt, solange der Flotationsschaum (6) sich im Flotationsbehälter (1, 1', 1'', 1''') befindet.

26. Flotationsverfahren nach einem der Ansprüche 1 bis 25,
**dadurch gekennzeichnet,**
**daß** der Flotationsschaum (6) vor Zuführung der Flüssigkeit (F) aus dem Flotationsbehälter (1, 1', 1", 1'") entfernt wird.

27. Flotationsverfahren nach einem der voranstehenden Ansprüche,
**dadurch gekennzeichnet,**
**daß** die zugeführte Flüssigkeit (F) Wasser ist.

28. Flotationsverfahren nach einem der Ansprüche 1 bis 27,
**dadurch gekennzeichnet,**
**daß** die zugeführte Flüssigkeit (F) eine Mischung aus Wasser und Chemikalien ist, wobei die Chemikalien von Art der verwendeten Flotationschemikalien sind.

29. Flotationsverfahren nach Anspruch 25,
**dadurch gekennzeichnet,**
**daß** die Flüssigkeit (F) auf oder im Flotationsschaum (6) aus Dampf kondensiert.

30. Flotationsverfahren nach Anspruch 27,
**dadurch gekennzeichnet,**
**daß** die Flüssigkeit (F) auf oder im Flotationsschaum (6) aus übersättigter Luft kondensiert.

31. Flotationsvorrichtung zur Durchführung des Verfahrens nach einem der voranstehenden Ansprüche mit einem Flotationsbehälter (1,1', 1',1'''), einer Zuführleitung (2) für die zu flotierende Suspension, einer Abführleitung (3) für den durch Flotation gereinigten Gutstoff, Mittel (4) zur Zuführung von Blasen bildendem Gas, insbesondere Luft, sowie einer Flotationsschaum-Abführeinrichtung (5),
**dadurch gekennzeichnet,**
**daß** mindestens eine Zuführeinrichtung (7) vorgesehen ist, mit der dem bereits gebildeten Flotationsschaum (6) eine Benetzungsflüssigkeit (7) mit so geringer auf die Schaumblasen des Flotationsschaumes wirkenden Energie zugeführt wird, daß der Flotationsschaum dadurch im wesentlichen stabilisiert wird.

32. Flotationsvorrichtung nach Anspruch 31,
**dadurch gekennzeichnet,**
**daß** der Flotationsbehälter (1'') eine Füllhöhe (H) von mindestens 3 m aufweist sowie flächige Einbauten (10) enthält, welche innerhalb des im Betrieb mit Suspension gefüllten Raumes sind und die Vermischung von gereinigter Suspension und Schaum behindern.

33. Flotationsvorrichtung nach Anspruch 31,
**dadurch gekennzeichnet,**
**daß** der Flotationsbehälter (1'') eine Füllhöhe (H) von mindestens 2 m aufweist sowie flächige Einbauten (10) enthält, welche innerhalb des im Betrieb mit Suspension gefüllten Raumes sind und die Vermischung von gereinigter Suspension und Schaum behindern.

34. Flotationsvorrichtung nach Anspruch 32 oder 33,
**dadurch gekennzeichnet,**
**daß** aus dem Flotationsbehälter (1'') Teilströme von Suspension abgezogen und an anderer Stelle wieder in den Flotationsbehälter eingeleitet werden.

35. Flotationsvorrichtung nach Anspruch 34,
**dadurch gekennzeichnet,**
**daß** die abgezogenen Teilströme vor dem erneuten Einleiten begast werden.

36. Flotationsvorrichtung nach Anspruch 31,
**dadurch gekennzeichnet,**
**daß** die Höhendifferenz (H') zwischen Auslauf (3) und Schaumunterseite maximal 2 m beträgt.

37. Flotationsvorrichtung nach Anspruch 31 oder 36,
**dadurch gekennzeichnet,**
**daß** die Höhendifferenz (H'') zwischen Einlauf (2) und Schaumunterseite maximal 2 m beträgt.

38. Flotationsvorrichtung nach Anspruch 31, 32, 33, 34 oder 35,
**dadurch gekennzeichnet,**
**daß** der Flotationsschaum (6) nach oben von der Suspensionsoberfläche abgesaugt wird.

39. Flotationsvorrichtung nach Anspruch 31,
**dadurch gekennzeichnet,**
**daß** der Flotationsbehälter (1', 1''') im wesentlichen zylindrisch ist und einen tangentialen Einlauf (2) für die zu flotierende Suspension aufweist sowie eine zentral angeordnete Flotationsschaum- Abführeinrichtung (5).

40. Flotationsvorrichtung nach Anspruch 31,
**dadurch gekennzeichnet,**
**daß** die Zuführeinrichtung (7) mindestens ein feingelochtes oder poröses Rohr (15) aufweist.

41. Flotationsvorrichtung nach Anspruch 31,
**dadurch gekennzeichnet,**
**daß** die Zuführeinrichtung (7) mindestens ein geschlitztes Rohr (16) aufweist.

42. Flotationsvorrichtung nach Anspruch 31.,
**dadurch gekennzeichnet,**
**daß** die Zuführeinrichtung (7) mindestens ein mit Sprühdüsen versehenes Rohr (17, 17') aufweist.

## Claims

1. A flotation method for the precipitation of at least some of the disturbing solid particles contained in a suspension (S1) containing paper fibre, in which solid particles are collected and led off together with gas bubbles in the flotation foam (6) in a flotation container (1, 1', 1", 1"'),
**characterised in that** a wetting liquid (F) is supplied to the already formed flotation foam (6) for its stabilisation with an energy too low to destroy the flotation foam.

2. A flotation method in accordance with claim 1, **characterised in that** a liquid (F) is supplied to the already formed flotation foam (6) at a wetting rate of at most 50 litres per square meter and minute such that at most an insignificant part of the flotation foam (6) is destabilised and destroyed by this liquid (F).

3. A flotation method in accordance with claim 2, **characterised in that** the wetting rate amounts to at most 9 litres per square metre and minute.

4. A flotation method in accordance with claim 1, or claim 2 or claim 3, **characterised in that** the supplied liquid (F) is supplied in such a finely distributed form that a spray is created.

5. A flotation method in accordance with claim 4, **characterised in that** the flotation foam (6) is acted upon by a spray which has a wetting rate of 0.5 to 5 litres per square metre and minute.

6. A flotation method in accordance with any one of the preceding claims, **characterised in that** a droplet diameter of at most 1.5 mm is set on spraying.

7. A flotation method in accordance with any one of the preceding claims, **characterised in that** a droplet diameter of at most 1 mm is set on spraying.

8. A flotation method in accordance with any one of the preceding claims, **characterised in that** the impact speed of the droplets on the flotation foam is a maximum of 5 m/sec.

9. A flotation method in accordance with any one of the preceding claims, **characterised in that** the impact speed of the droplets on the flotation foam is a maximum of 1 m/sec.

10. A flotation method in accordance with any one of the preceding claims, **characterised in that** the rising height of the gas bubbles in the suspension amounts to a maximum of 3 m up to the flotation foam (6) in the flotation container (1, 1', 1", 1"').

11. A flotation method in accordance with any one of the preceding claims, **characterised in that** the rising height of the gas bubbles in the suspension amounts to a maximum of 2 m up to the flotation foam (6) in the flotation container (1, 1', 1", 1"').

12. A flotation method in accordance with any one of the preceding claims, **characterised in that** the supply of the liquid (F) takes place from a point which is located above the flotation foam (6).

13. A flotation method in accordance with any one of the preceding claims, **characterised in that** the supply of the liquid (F) takes place from a point which is located inside the flotation foam (6).

14. A flotation method in accordance with any one of the preceding claims, **characterised in that** the supply of the liquid (F) takes place from a point which is located in the region of or directly at the interface between the flotation foam (6) and the suspension.

15. A flotation method in accordance with any one of the preceding claims, **characterised in that** the flotation foam substantially fills up the volume between the surface of the suspension and the inner wall of the flotation container (1, 1', 1", 1"').

16. A flotation method in accordance with any one of the preceding claims, **characterised in that** a sieve-like distribution element (14) is used which is wetted by the liquid (F) and supplies this to the flotation foam (6) in a finely distributed manner.

17. A flotation method in accordance with claim 16, **characterised in that** the sieve-like distribution element (14) is attached above the flotation foam (6).

18. A flotation method in accordance with claim 16, **characterised in that** the sieve-like distribution element (14) is attached in the flotation foam (6).

19. A flotation method in accordance with claim 16, or claim 17 or claim 18, **characterised in that** the sieve-like distribution element (14) floats on the suspension in the flotation container (1, 1', 1", 1"').

20. A flotation method in accordance with claim 16, claim 17 or claim 18, **characterised in that** the sieve-like distribution element (14) is moved such that it supports the transport of the foam.

21. A flotation method in accordance with any one of the preceding claims, **characterised in that** the flow direction of the supplied liquid (F) through the flotation foam (6) is approximately at a right angle to the flow direction of the flotation foam (6) such that the cross-flow principle is applied.

22. A flotation method in accordance with any of claims 1 to 20, **characterised in that** the flow direction of the added liquid (F) through the flotation foam (6) is substantially opposite to the flow direction of the flotation foam (6) such that the counter-flow principle is applied.

23. A flotation method in accordance with claim 22, **characterised in that** the flotation foam (6) is led off from the surface of the suspension in the flotation container (1, 1', 1", 1"') against the direction of the gravitational field applied.

24. A flotation method in accordance with claim 22, **characterised in that** the flotation foam (6) is led off from the surface of the suspension in the flotation container (1, 1', 1", 1"') transversely to the direction of the gravitational field applied.

25. A flotation method in accordance with any one of the preceding claims, **characterised in that** the supply of the liquid (F) takes place as long as the flotation foam (6) is located in the flotation container (1, 1', 1", 1"').

26. A flotation method in accordance with any one of claims 1 to 25, **characterised in that** the flotation foam (6) is removed from the flotation container (1, 1', 1", 1"') before supplying the liquid (F).

27. A flotation method in accordance with any one of the preceding claims, **characterised in that** the supplied liquid (F) is water.

28. A flotation method in accordance with any one of claims 1 to 27, **characterised in that** the supplied liquid (F) is a mixture of water and chemicals, with the chemicals being of the kind of the flotation chemicals used.

29. A flotation method in accordance with claim 25, **characterised in that** the liquid (F) condenses from steam on or in the flotation foam (6).

30. A flotation method in accordance with claim 27, **characterised in that** the liquid (F) condenses from supersaturated air on or in the flotation foam (6).

31. A flotation apparatus for the carrying out of the method in accordance with any one of the preceding claims, comprising a flotation container (1, 1', 1", 1"'), a supply line (2) for the suspension to be floated, a discharge line (3) for the accepted stock cleaned by flotation, means (4) to supply gas forming bubbles, in particular air, and a flotation foam discharge device (5),
**characterised in that** at least one supply device (7) is provided with which a wetting liquid (7) is supplied to the already formed flotation foam (6) with an energy acting on the foam bubbles of the flotation foam which is so low that the flotation foam is thereby substantially stabilised.

32. A flotation apparatus in accordance with claim 31, **characterised in that** the flotation container (1") has a filling level (H) of at least 3 m and includes areal installations (10) which are inside the space filled with suspension in operation and hinder the mixing of cleaned suspension and foam.

33. A flotation apparatus in accordance with claim 31, **characterised in that** the flotation container (1") has a filling level (H) of at least 2 m and includes areal installations (10) which are inside the space filled with suspension in operation and hinder the mixing of cleaned suspension and foam.

34. A flotation apparatus in accordance with claim 32 or claim 33, **characterised in that** part flows of suspension are taken out of the flotation container (1") and led back into the flotation container again at a different point.

35. A flotation apparatus in accordance with claim 34, **characterised in that** the removed part currents are gas-flushed before the repeated leading back in.

36. A flotation apparatus in accordance with claim 31, **characterised in that** the height difference (H') between the outflow (3) and the lower side of the foam amounts to a maximum of 2 m.

37. A flotation apparatus in accordance with claim 31 or claim 36, **characterised in that** the height difference (H") between the inflow (2) and the lower side of the foam amounts to a maximum of 2 m.

38. A flotation apparatus in accordance with claim 31, claim 32, claim 33, claim 34 or claim 35, **characterised in that** the flotation foam (6) is upwardly sucked off the suspension foam.

39. A flotation apparatus in accordance with claim 31, **characterised in that** the flotation container (1', 1"') is substantially cylindrical and has a tangential inflow (2) for the suspension to be floated and a centrally arranged flotation foam discharge device (5).

40. A flotation apparatus in accordance with claim 31, **characterised in that** the supply device (7) has at least one finely perforated or porous pipe (15).

41. A flotation apparatus in accordance with claim 31, **characterised in that** the supply device (7) has at least one slit pipe (16).

42. A flotation apparatus in accordance with claim 31, **characterised in that** the supply device (7) has at least one pipe (17, 17') provided with atomiser nozzles.

## Revendications

1. Procédé de flottation pour la séparation d'au moins une partie des particules solides parasites contenues dans une suspension à fibres de papier (S1), dans lequel des particules solides ainsi que des bulles de gaz dans l'écume de flottation (6) sont récupérées dans une cuve de flottation (1, 1', 1'', 1''') et évacuées,
**caractérisé en ce que** pour stabiliser l'écume de flottation (6) déjà formée, un liquide de mouillage (F) lui est amené avec une énergie trop faible pour détruire l'écume de flottation.

2. Procédé de flottation selon la revendication 1,
**caractérisé en ce qu'**à l'écume de flottation (6) déjà formée un liquide (F) est amené avec un taux de mouillage de 50 litres au maximum par mètre carré et par minute, de telle manière qu'au maximum une partie insignifiante de l'écume de flottation (6) est déstabilisée et détruite par ce liquide (F).

3. Procédé de flottation selon la revendication 2,
**caractérisé en ce que** le taux de mouillage est de 9 litres au maximum par mètre carré et par minute.

4. Procédé de flottation selon la revendication 1, 2 ou 3,
**caractérisé en ce que** le liquide (F) amené est amené sous une forme si finement diffusée qu'il se crée un brouillard de pulvérisation.

5. Procédé de flottation selon la revendication 4,
**caractérisé en ce que** l'écume de flottation (6) est recouverte par un brouillard de pulvérisation présentant un taux de mouillage compris entre 0,5 et 5 litres par mètre carré et par minute.

6. Procédé de flottation selon l'une des revendications précédentes,
**caractérisé en ce que** lors de la pulvérisation on règle un diamètre de gouttes de 1,5 mm au maximum.

7. Procédé de flottation selon l'une des revendications précédentes,
**caractérisé en ce que** lors de la pulvérisation on règle un diamètre de gouttes de 1 mm au maximum.

8. Procédé de flottation selon l'une des revendications précédentes,
**caractérisé en ce que** la vitesse d'impact des gouttes sur l'écume de flottation est de 5 m/s. au maximum.

9. Procédé de flottation selon l'une des revendications précédentes,
**caractérisé en ce que** la vitesse d'impact des gouttes sur l'écume de flottation est d 1 m/s. au maximum.

10. Procédé de flottation selon l'une des revendications précédentes,
**caractérisé en ce que** dans la cuve de flottation (1, 1', 1'', 1''') la hauteur de remontée des bulles de gaz dans la suspension jusqu'à l'écume de flottation (6) est de 3 m au maximum.

11. Procédé de flottation selon l'une des revendications précédentes,
**caractérisé en ce que** dans la cuve de flottation (1, 1', 1'', 1''') la hauteur de remontée des bulles de gaz dans la suspension jusqu'à l'écume de flottation (6) est de 2 m au maximum.

12. Procédé de flottation selon l'une des revendications précédentes,
**caractérisé en ce que** l'amenée du liquide (F) est réalisée depuis un endroit se trouvant au-dessus de l'écume de flottation (6).

13. Procédé de flottation selon l'une des revendications précédentes,
**caractérisé en ce que** l'amenée du liquide (F) est réalisée depuis un endroit se trouvant à l'intérieur de l'écume de flottation (6).

14. Procédé de flottation selon l'une des revendications précédentes,
**caractérisé en ce que** l'amenée du liquide (F) est réalisée depuis un endroit se trouvant dans la zone de la couche limite ou directement sur celle-ci entre l'écume de flottation (6) et la suspension.

15. Procédé de flottation selon l'une des revendications précédentes,
**caractérisé en ce que** l'écume de flottation remplit pour l'essentiel le volume entre la surface de la suspension et la paroi intérieure de la cuve de flottation (1, 1', 1", 1'").

16. Procédé de flottation selon l'une des revendications précédentes,
**caractérisé en ce qu'**un élément de diffusion (14) en forme de tamis est utilisé, qui est mouillé par le liquide (F) et qui amène ce dernier à l'écume de flottation (6) de manière finement diffusée.

17. Procédé de flottation selon la revendication 16,
**caractérisé en ce que** l'élément de diffusion (14) en forme de tamis est disposé au-dessus de l'écume de flottation (6).

18. Procédé de flottation selon la revendication 16,
**caractérisé en ce que** l'élément de diffusion (14) en forme de tamis est disposé dans l'écume de flottation (6).

19. Procédé de flottation selon la revendication 16, 17 ou 18,
**caractérisé en ce que** l'élément de diffusion (14) en forme de tamis flotte sur la suspension dans la cuve de flottation (1, 1', 1'', 1''').

20. Procédé de flottation selon la revendication 16, 17 ou 18,
**caractérisé en ce que** l'élément de diffusion(14) en forme de tamis est déplacé de telle manière qu'il aide au transport de l'écume.

21. Procédé de flottation selon l'une des revendications précédentes,
**caractérisé en ce que** le sens du flux du liquide (F) ajouté à travers l'écume de flottation (6) est sensiblement à angle droit par rapport au sens du flux de l'écume de flottation (6) de manière à utiliser le principe des flux croisés.

22. Procédé de flottation selon l'une des revendication 1 à 20,
**caractérisé en ce que** le sens du flux du liquide (F) ajouté à travers l'écume de flottation (6) est pour l'essentiel contraire au sens du flux de l'écume de flottation (6) de manière à utiliser le principe des flux à contre-courant.

23. Procédé de flottation selon la revendication 22,
**caractérisé en ce que** l'écume de flottation (6) est évacuée de la surface de la suspension dans la cuve de flottation (1, 1', 1'', 1''') contre le sens du champ de gravitation présent.

24. Procédé de flottation selon la revendication 22,
**caractérisé en ce que** l'écume de flottation (6) est évacuée de la surface de la suspension dans la cuve de flottation (1, 1', 1'', 1''') transversalement par rapport à la direction du champ de gravitation présent.

25. Procédé de flottation selon l'une des revendications précédentes,
**caractérisé en ce que** l'amenée du liquide (F) est effectuée tant que l'écume de flottation (6) se trouve dans la cuve de flottation (1, 1', 1'', 1''').

26. Procédé de flottation selon l'une des revendications 1 à 25,
**caractérisé en ce que** l'écume de flottation (6) est enlevée de la cuve de flottation (1, 1', 1'', 1''') avant l'amenée du liquide (F).

27. Procédé de flottation selon l'une des revendications précédentes,
**caractérisé en ce que** le liquide (F) amené est de l'eau.

28. Procédé de flottation selon l'une des revendications 1 à 27,
**caractérisé en ce que** le liquide (F) amené est un mélange d'eau et de produits chimiques, dans lequel les produits chimiques sont du type des produits chimiques de flottation utilisés.

29. Procédé de flottation selon la revendication 25,
**caractérisé en ce que** le liquide (F) sur ou dans l'écume de flottation (6) est condensé à partir de vapeur.

30. Procédé de flottation selon la revendication 27,
**caractérisé en ce que** le liquide (F) sur ou dans l'écume de flottation (6) est condensé à partir d'air sursaturé.

31. Dispositif de flottation pour la mise en oeuvre du procédé selon l'une des revendications précédentes, comprenant une cuve de flottation (1, 1', 1'', 1'''), une conduite d'amenée (2) pour la suspension devant flotter, une conduite d'évacuation (3) pour le produit clarifié par la flottation, des moyens (4) pour amener du gaz formant des bulles, notamment de l'air, ainsi qu'un dispositif d'évacuation d'écume de flottation (5),
**caractérisé en ce qu'**au moins un dispositif d'amenée (7) est prévu, permettant d'amener à l'écume de flottation (6) déjà formée un liquide de mouillage (7) avec une énergie agissant sur les bulles d'écume de l'écume de flottation d'une manière tellement faible que l'écume de flottation s'en trouve pour l'essentiel stabilisée.

32. Dispositif de flottation selon la revendication 31,
**caractérisé en ce que** la cuve de flottation (1'') présente une hauteur de remplissage (H) d'au moins 3 m ainsi que des aménagements plans (10) qui se trouvent à l'intérieur de l'espace rempli pendant le fonctionnement par une suspension et qui empêchent le mélange de la suspension clarifiée et de l'écume.

33. Dispositif de flottation selon la revendication 31,
**caractérisé en ce que** la cuve de flottation (1'') présente une hauteur de remplissage (H) d'au moins 2 m ainsi que des aménagements plans (10) qui se trouvent à l'intérieur de l'espace rempli pendant le fonctionnement par une suspension et qui empêchent le mélange de la suspension clarifiée et de l'écume.

34. Dispositif de flottation selon la revendication 32 ou 33,
**caractérisé en ce que** des flux partiels de suspension sont retirés de la cuve de flottation (1'') et reconduits dans la cuve de flottation à un autre endroit.

35. Dispositif de flottation selon la revendication 34,
**caractérisé en ce que** les flux partiels retirés sont gazés avant la reconduction.

36. Dispositif de flottation selon la revendication 31,
**caractérisé en ce que** la différence de hauteur (H') entre l'évacuation (3) et la face inférieure de l'écume est de 2 m au maximum.

37. Dispositif de flottation selon la revendication 31 ou 36,
**caractérisé en ce que** la différence de hauteur (H') entre l'entrée (2) et la face inférieure de l'écume est de 2 m au maximum.

38. Dispositif de flottation selon la revendication 31, 32, 33, 34 ou 35,
**caractérisé en ce que** l'écume de flottation (6) est aspirée vers le haut de la surface de la suspension.

39. Dispositif de flottation selon la revendication 31,
**caractérisé en ce que** la cuve de flottation (1', 1''') est pour l'essentiel cylindrique et présente une entrée tangentielle (2) pour la suspension devant flotter ainsi qu'un dispositif d'évacuation (5) de l'écume de flottation disposé au centre.

40. Dispositif de flottation selon la revendication 31,
**caractérisé en ce que** le dispositif d'amenée (7) présente au moins un tube finement perforé ou poreux (15).

41. Dispositif de flottation selon la revendication 31,
**caractérisé en ce que** le dispositif d'amenée (7) présente au moins un tube fendu (16).

42. Dispositif de flottation selon la revendication 31,
**caractérisé en ce que** le dispositif d'amenée (7) présente au moins un tube (17, 17') pourvu de tuyères de pulvérisation.
